# EUROPÄISCHE PATENTSCHRIFT

(11) **EP 2 363 234 B1**
(45) Veröffentlichungstag und Bekanntmachung des Hinweises auf die Patenterteilung: **01.01.2014**
(21) Anmeldenummer: 11001621.9
(22) Anmeldetag: 28.02.2011
(51) Int. Cl.: B23Q 1/00, B23Q 3/06

(54) **Bearbeitungsmaschine mit einem Werkstückträger, der mit einer Spannvorrichtung oder einem Drehfutter verbunden werden kann, so wi Verwendung einer solchen Bearbeitungsmaschine.**
Processing machine with a workpiece holder to which a clamping device or a chuck can be connected, and use of such a processing machine.
Machine de traitement dotée d'un porte pièce auquel peuvent être connéctés un dispositif de serrage ou un madrin, et utilisation d'une telle machine de traitement.

(30) Priorität: 02.03.2010 DE 102010009947; 08.09.2010 DE 102010044781
(43) Veröffentlichungstag der Anmeldung: 07.09.2011
(73) Patentinhaber: Grob-Werke GmbH & Co. KG, 87719 Mindelheim (DE)
(72) Erfinder: Grob, Burkhart Dr. h.c., 86825 Bad Wörishofen (DE)
(74) Vertreter: Pfister, Stefan Helmut Ulrich

(56) Entgegenhaltungen:
- EP-A1- 2 210 699
- WO-A1-2006/003683
- US-A1- 2007 057 135

## Beschreibung

Die Erfindung betrifft eine Bearbeitungsmaschine für das Bearbeiten eines oder mehrerer Werkstücke, wobei die Bearbeitungsmaschine einen Werkstückträger aufweist, welcher das oder die Werkstück/e trägt, und die Verwendung einer solchen Bearbeitungsmaschine.

Vorgenannte Bearbeitungsmaschinen sind zum Beispiel als spanabhebende Bearbeitungsmaschinen, insbesondere in sogenannten Bearbeitungszentren hinlänglich bekannt.

Üblicherweise ist die Anordnung dabei so gewählt, dass das Werkstück auf einem Werkstückträger festgespannt ist und der Werkstückträger entweder im Raum feststehend oder entlang beziehungsweise um eine oder mehrere Längs- oder Rotationsachsen bewegbar ist. Die spanabhebende Bearbeitung erfolgt dabei durch ein Bearbeitungswerkzeug, das von einem Spindelantrieb relativ angetrieben ist und wobei die Spindel in geeigneter Weise gegen das Werkstück anstellbar ist. Das Gleiche wird auch dadurch erreicht, dass der werkstückträger im Raum positionierbar ist.

Im Stand der Technik rotiert dabei das von der Spindel angetriebene Bearbeitungswerkzeug und führt so die spanabhebende Bearbeitung zum Beispiel ein Fräsen oder Bohren aus.

Die Druckschriften US 2007/0057135 und WO 2006/003683 zeigen Spannvorrichtungen für Werkstücke. Die Spannvorrichtungen weisen jeweils eigene Antriebe für die Betätigung der Spannelemente auf.

Eine weitere Ausführungsform einer Spannvorrichtung zeigt die EP 2 210 699. Hier werden die Spannbacken durch einen Antrieb eines Werkzeugmagazines, das die Spannvorrichtung trägt, betätigt.

Es ist Aufgabe der vorliegenden Erfindung den Einsatzbereich vorgenannter Bearbeitungsmaschinen auszuweiten.

zur Lösung dieser Aufgabe geht die Erfindung von einer Bearbeitungsmaschine -wie eingangs beschrieben - aus und schlägt vor, dass der Werkstückträger eine von einem Antrieb angetriebene Antriebswelle aufweist und die Antriebswelle einen Adapteranschluss besitzt sur wahlweisen Verbindung der Antriebswelle mit einem Kraftübertragungsmittel für eine zum mittelbaren oder unmittelbaren Festspannen des Werkstückes dienenden Spannvorrichtung, wobei der Antrieb in diesem Anwendungsfall für eine Betätigung der Spannvorrichtung dient oder zur alternativen Verbindung der Antriebswelle mit einem Drehfutter, welches der mittelbaren oder unmittelbaren Aufnahme des Werkstückes für rotatorische Schleif- oder Drehbearbeitung am Werkstück dient und der Antrieb in jenem Anwendungsfall zur Rotation des Werkstückes dient.

Der Vorschlag weitet den Einsatzbereich der bekannten Bearbeitungsmaschinen erheblich aus. Neben der bekannten spanabhebenden Bearbeitung durch ein üblicherweise rotatorisch angetriebenes Bearbeitungswerkzeug ist nun auch eine Drehbearbeitung möglich. In der Regel steht dabei das Bearbeitungswerkzeug selbst still, ist aber aufgrund der NC-gesteuerten Achsen der Spindel entlang einer, zwei oder drei Raumachsen relativ zum Werkstück positionierbar. Daher rotiert das Bearbeitungswerkzeug in diesem Anwendungsfall nicht (zwingend),ist aber trotzdem entlang der Achsen entsprechend bewegbar und positionierbar.

Ein wesentlicher Vorzug der Bearbeitungsmaschine liegt dabei insbesondere darin, dass somit all die Genauigkeitsmerkmale, die für spanabhebende Bearbeitung mit rotatorischem Bearbeitungswerkzeug bekannt sind, sofort auch bei einer Drehbearbeitung einsetzbar sind.

Dabei ist die Ausfertigung so realisiert, dass der Umrüstaufwand sehr gering ist und der jeweils andere Einsatzzweck mit einem schnellen Umbau an dem Werkstückträger erfolgt. Um diesen schnellen Umbau durchzuführen, wird es als günstig angesehen, wenn der Adapteranschluss als Schnellverbindungsanschluss, Schnellkupplung, Klauenkupplung, Schraubverbindung oder Bajonettverschluss ausgebildet ist, bleibt dabei jedoch nicht auf die vorgenannten Ausführungsformen eines Adapteranschlusses beschränkt. Vielmehr können hier sämtliche möglichen Anschlussarten eingesetzt werden, die als sinnvoll und mit der Bearbeitungsmaschine verwendbar angesehen werden. Ziel ist es stets, hier einen Anschluss zur Verfügung zu stellen, der mit wenigen Handgriffen, vorzugsweise automatisch, einen Austausch der Kraftübertragungsmittel einer dem mittelbaren oder unmittelbaren Festspannen des Werkstückes dienenden Spannvorrichtung gegen ein Drehfutter zulässt.

Ist an dem Adapteranschluss das Kraftübertragungsmittel für eine zum mittelbaren oder unmittelbaren Festspannen des Werkstückes dienenden Spannvorrichtung angeordnet, so wirkt die Antriebswelle hier auf die Kraftübertragungsmittel. Der Werkstückträger ist dabei bevorzugt im Raum feststehend ausgebildet.

Wird über den Adapteranschluss jedoch ein Drehfutter angeordnet, so erfolgt hier über den Adapteranschluss ein direkter Anschluss der Antriebswelle an dem Drehfutter, sodass ein im Drehfutter aufgenommenes, das heißt gespanntes oder in sonstiger Art und Weise festgelegtes Werkstück, rotatorisch bewegbar ist. Ein gegen das Werkstück angestelltes, bevorzugt entlang einer, zwei oder drei Raumachsen relativ zum Werkstück positionierbares, Bearbeitungswerkzeug trägt dann in einem Drehoder Schleifprozess Material vom Werkstück ab und bewirkt somit dessen Verformung. Beide Anwendungsfälle lassen sich somit in der gleichen Maschine realisieren.

Der Antriebsmotor ist dabei in einem Werkstücktisch ortsfest, ggf. in einem Rundtisch integriert ausgebildet. Über den Adapteranschluss an der Antriebswelle erfüllt der Antriebsmotor, der bevorzugt als Hydraulik- oder Elektromotor ausgebildet ist, dann seine Funktion als Spannantrieb für die Spannelemente der Spannvorrichtung, sofern in der Bearbeitungsmaschine eine Spannvorrichtung zum Festsetzen des Werkstückes verwendet wird. Wird die Spannvorrichtung demontiert, so verbleibt der Antriebsmotor im Werkzeugtisch und der Adapteranschluss wird frei, um beispielsweise ein Drehfutter oder eine sonstige Aufnahmevorrichtung für ein Werkstück zu dessen rotatorischer Schleif- oder Drehbearbeitung aufzunehmen. Der Antriebsmotor treibt dann das Drehfutter beziehungsweise das darin gespannte beziehungsweise gehalterte Werkstück an und versetzt dieses in Drehbewegung.

Bei dem Antriebsmotor, besteht die Möglichkeit und wird es als günstig erachtet, wenn dieser als Elektro- oder Hydraulikmotor vorgesehen ist. Der Motor dient zum Antrieb der Antriebswelle, die in einer ersten Ausführungsform beziehungsweise Weiterbildung der Bearbeitungsmaschine auf die Kraftübertragungsmittel für die zum mittelbaren oder unmittelbaren Festspannen des Werkstückes dienenden Spannvorrichtung einwirkt. In der zweiten, alternativen Ausgestaltungsmöglichkeit der Bearbeitungsmaschine, die auf ein und demselben Maschinengrundträger realisiert wird, dient die Antriebswelle beziehungsweise der diese antreibende Motor zur Realisierung einer Drehbewegung des Werkstückes beziehungsweise eines das Werkstück aufnehmenden oder halternden Drehfutters oder dergleichen. Mittel zum Festlegen des zu bearbeitenden Werkstückes im Drehfutter sind dann in diesem selbst angeordnet und werden ggf. unabhängig vom Antrieb des Drehfutters durch geeignete Stellantriebe selbst betätigt.

Eine Effizienzsteigerung der Bearbeitungsmaschine wird dadurch erreicht, dass anstelle aufwändiger Hydraulikkomponenten ein oder mehrere Elektromotor/en als Antrieb/e, insbesondere als mittelbare oder unmittelbare Spann- oder als Drehantrieb/e in allen möglichen Ausführungsformen sowie Kombinationen daraus verwendet wird/werden.

Als günstig wird hierbei angesehen, wenn der Antrieb als Elektromotor, insbesondere Servomotor ausgebildet ist. Dieser Elektromotor beziehungsweise Servomotor kann dabei insbesondere als Synchron-, Asynchron- oder Gleichstrommotor ausgebildet sein. Vorteilhaft bei der Verwendung derartiger Motoren ist deren kompakte Bauform, der robuste Aufbau und die Möglichkeit zum Betrieb in einem geschlossenen Regelkreis. Der Betrieb kann dabei momentengeregelt, geschwindigkeitsgeregelt oder positionsgeregelt sein.

Als vorteilhafte Weiterbildung, die selbstverständlich im Zusammenhang mit sämtlichen, einzelnen oder Kombinationen von Ausführungsformen realisierbar ist, wird angesehen, wenn der Antrieb als geberloser Synchron- oder Asynchronmotor ausgebildet ist. Insbesondere ein permanentmagneterregter Synchronmotor (PMSM) ist hierbei bevorzugt. Dabei ist von dem Vorschlag gleichermaßen die Anordnung des/der Permanentmagnete/n als vergrabene/r Magnet/e oder als Oberflächenmagnet/e am Rotor umfasst, wobei die Verwendung vergrabener Magnete/n im Rotor als besonders vorteilhaft angesehen wird, da mechanische Belastungen im Rotorblechpaket auftreten und nicht an der Oberfläche. Zudem sind geringere Verluste im Permanentmagneten zu verzeichnen.

Der Einsatz von Permanentmagneten auf oder in dem Rotor erspart die bei Synchronmaschinen sonst vorhandene Erregerwicklung.

Als Vorteil der Verwendung geberloser Motoren, insbesondere von Synchronmotoren wird angesehen, dass hier auf die zusätzliche Anordnung von Gebern oder Sensoren für die Rotorlagebestimmung verzichtet werden kann und sich die Baumaße entsprechend verringern. In den Bearbeitungsmaschinen beziehungsweise den hierin vorgesehenen Werkzeug- beziehungsweise Werkstückspannbeziehungsweise -drehvorrichtungen ist der Bauraum für die einzelnen Komponenten knapp bemessen, um eine möglichst kompakte Bauart des gesamten Bearbeitungszentrums realisieren zu können. Neben der Steigerung des Wirkungsgrades und der Dynamik herkömmlicher Bearbeitungsmaschinen kann durch die Verwendung von geberlosen Motoren der Bauraum beziehungsweise können die Bauraumanforderungen seitens des Antriebes optimiert werden.

In einer als bevorzugt angesehenen Ausführungsform der Bearbeitungsmaschine beziehungsweise in Kombinationen von Ausführungsformen oder Kombinationen einzelner oder aller Merkmale verschiedener Ausführungsformen ist eine geberlose Rotorlagebestimmung, insbesondere eine geberlose Stillstandslageerkennung vorgesehen, die sich insbesondere über den geberlosen Synchronmotor realisieren lässt. So kann in einem geberlosen Synchronmotor beispielsweise die Position des Rotors mit Hilfe einer Anisothropie der resultierenden Induktivität in den verwendeten Statorspulen des Stators geschätzt werden. Beim Betrieb des Synchronmotors können abhängig von der Rotorlage in den Statorspulen verschiedenen resultierende Induktivitäten gemessen werden, über die sich die Position des Rotors abschätzen lässt. Als vorteilhaft wird in diesem Zusammenhang angesehen, wenn die Rotorlagebestimmung beziehungsweise die Stillstandslageerkennung software- oder NC-gesteuert durchführbar ist. Eine entsprechende Integration in die Maschinensteuerung, zum Beispiel eine Mikrocontroller umfassende Maschinensteuerung kann auf einfache Art und Weise realisiert werden.

Eine bevorzugte Möglichkeit zur Bestimmung der Rotorlage beziehungsweise der Stillstandslage in allen, einzelnen oder kombinierten Ausführungsformen der Bearbeitungsmaschine sieht beispielsweise vor, dass dem Ansteuersignal zum Anlegen der Statorströme für die Statorspulen Messsignale so überlagert werden, dass zusätzlich zum Antriebsmagnetfeld ein Wechselmagnetfeld erzeugt wird, wobei die durch die Mehrsignale hervorgerufenen Stromflüsse durch die Statorspulen von der rotorlageabhängigen resultierenden Induktivität des Synchronmotors abhängen. Die resultierende Induktivität des Synchronmotors hängt von der Position des Rotors ab. Dabei basiert das Verfahren zur geberlosen Rotorlagebestimmung auf der Detektion der magnetischen Anisottopie von Längs- und Querinduktivität des Rotors. Wird eine sich schnell ändernde Spannung an den Motor angelegt, so fällt die Spannung im Ständerstrang fast ausschließlich an der rotorlageabhängigen Induktivität ab. Der erregte Strom wird somit durch die Rotorlage moduliert und kann dementsprechend ausgewertet werden. Die Signalstärke ist proportional zur Differenz von Längs- und Querinduktivität.

Die Eingangs- und Ausgangssignale werden von einer Steuerbeziehungsweise Messsoftware beziehungsweise der NC-Steuerung verarbeitet, um hierüber die Rotorlage beziehungsweise die Stillstandslage zu definieren. Diese definiert wiederum die Werkzeug-Einsatzposition beziehungsweise die Werkstück-Bearbeitungsposition beziehungsweise die Position des durch einen solchen Elektromotor angetriebenen Spannelements oder der Spannvorrichtung für das Werkstück. Gegebenenfalls ist in der Maschinensteuerung für die Auswertung der Rotorlage ein separater Schaltkreis beziehungsweise ein hierfür programmierter Mikrocontroller vorgesehen.

Die Verwendung von Synchronmotoren hat neben der Reduzierung des für den Antrieb notwendigen Bauraumes weitere Vorteile. So werden die Installationskosten insgesamt reduziert, da Geberleitung, Geber und Geberschnittstelle wegfallen. Die Synchronmotoren ermöglichen eine hohe Dynamik und eine schlupffreie Bewegung. Neben dem reduzierten Platzbedarf weisen diese auch noch ein geringes Gewicht, bei jedoch hohem Wirkungsgrad und zudem eine hohe Verfügbarkeit auf. Die Lagebestimmung kann auf einfache Art und Weise in die Maschinensteuerung der Bearbeitungsmaschine integriert werden, eine Um- oder Nachrüstbarkeit bestehender Maschinen ist gegeben.

Eine bevorzugte Ausführungsform der Bearbeitungsmaschine, die natürlich auch mit weiteren Ausführungsformen oder einzelnen Merkmalen in einer Bearbeitungsmaschine kombiniert zum Einsatz kommen kann, sieht vor, dass hier ein im Raum feststehend ausgebildeter Werkstückträger vorgesehen ist und eine Rotation des an dem Werkstückträger angeordneten Werkstückes, zusammen mit dem Werkstückträger selbst erfolgt, sodass eine mehrseitige Bearbeitung des Werkstückes durchgeführt werden kann. Selbstverständlich besteht auch die Möglichkeit, dass Werkzeugträger wie auch Werkstückträger entlang zumindest einer beziehungsweise mehrerer Achsen bewegbar oder drehbar ausgebildet sind, sodass sich die möglichen Bearbeitungspositionen vervielfachen.

Als günstig und im Zusammenhang mit allen vor- und nachgenannten Ausführungsformen der Bearbeitungsmaschine oder einzelnen Ausführungsformen realisierbar wird auch angesehen, wenn der Werkstückträger entlang zumindest einer Achse bewegbar und/oder drehbar ist. Um eine möglichst flexible Bearbeitung zu erreichen, kann das Werkstück relativ zu dem Bearbeitungswerkzeug an drei Raumachsen positionierbar ausgebildet werden. Neben den Longitudinalachsen sind aber auch Rotationsachsen vorgesehen. Die Rotationsachsen ermöglichen eine Drehung des Werkstückträgers um eine beispielsweise horizontal orientierte Drehachse. Daneben besteht die Möglichkeit, durch eine entsprechende Bewegbarkeit oder Drehbarkeit des Werkstückträgers, das Werkstück auch um eine vertikal orientierte weitere Drehachse zu drehen. Hierfür kann dann auch der die Kraftübertragungsmittel der zum mittelbaren oder unmittelbaren Festspannen des Werkstückes dienenden Spannvorrichtung beaufschlagende Antrieb für die Drehbewegung des gesamten Werkstückträgers verwendet werden. Hierfür können dann in der Spannvorrichtung entsprechende Kupplungen angeordnet werden, sodass nach dem Festspannen des Werkstückes die Antriebswelle beziehungsweise der Antrieb selbst für eine Drehung des Werkstückträgers um die vertikale Drehachse zur Verfügung steht.

Es wird als vorteilhaft, insbesondere im Zusammenhang mit sämtlichen, einzelnen oder kombinierten Ausführungsformen der.Bearbeitungsmaschine, angesehen, wenn der Antrieb direkt auf die Antriebswelle wirkt. Daneben besteht selbstverständlich auch die Möglichkeit, dass der Antrieb nur indirekt, zum Beispiel über ein Getriebe oder dergleichen auf die Antriebswelle wirkt. Neben der Verwendung eines Getriebes kommen selbstverständlich alle weiteren möglichen Arten der Kraftübertragung von Antrieb auf Antriebswelle zum Einsatz, sofern dies seitens der Maschinengeometrie und des angestrebten Verwendungszwecks als sinnvoll und realisierbar angesehen werden. Erfolgt die Kraftübertragung über ein Getriebe, so besteht hier auch die Möglichkeit, einen Antriebsmotor für den Antrieb verschiedener Spannvorrichtung beziehungsweise von mehreren Drehfuttern zu verwenden.

Eine bevorzugte Ausführungsform der Bearbeitungsmaschine, die nicht nur einzelnen, sondern auch in Kombination mit einer oder mehreren weiteren, bevorzugten Ausführungsformen beziehungsweise einem oder mehreren Merkmalen davon realisierbar ist, sieht vor, dass die über die Antriebswelle der Bearbeitungsmaschine betätigbare Spannvorrichtung eine das Werkstück tragende Tragplatte aufweist und sich die Tragplatte an mehreren Punkten auf dem Werkstückträger abstützt. Die Tragplatte kann selbstverständlich auch lösbar fest mit dem Werkstückträger verbunden sein. Hier sind dann entsprechende Befestigungsmittel, beispielsweise Schraubverbindungen oder dergleichen zu verwenden, um eine positionsgenaue und positionstreue Verbindung zwischen Tragplatte und Werkstückträger zu erreichen. An der Tragplatte selbst können Auflagepunkte für das Werkstück vorgesehen werden, die eine exakte Positionierung des Werkstückes ermöglichen. So wird eine hochgenaue Positionierung des Werkstückes erreicht, sodass die Spannvorrichtung an klar vorgegebenen Punkten des Werkstückes angreifen kann, um dieses gegen die Tragplatte beziehungsweise die Auflagepunkte zu spannen.

Eine weitere bevorzugte Ausführungsform der Bearbeitungsmaschine beziehungsweise eine Kombination einer oder mehrerer vorteilhaft weitergebildeter Ausführungsformen der Bearbeitungsmaschine, sieht vor, dass die Spannvorrichtung wenigstens ein Spannelement aufweist. Dieses Spannelement ist dabei über in der Spannvorrichtung vorgesehene Kraftübertragungsmittel betätigbar und dient zum Festlegen des Werkstückes. So können die Spannelemente beispielsweise Spannpratzen, die längsbeweglich an dem Spannelement vorgesehen sind, aufweisen. Diese Spannpratzen greifen in einer definierten Position am Werkstück ein und pressen dieses während der Bearbeitung auf die Tragplatte. Selbstverständlich können hier auch weitere Klemm- oder Spannmittel zusätzlich oder alternativ zu den genannten Spannpratzen verwendet werden.

Eine ebenfalls als vorteilhaft angesehene Ausführungsform der Bearbeitungsmaschine, die selbstverständlich auch im Zusammenhang mit sämtlichen, einzelnen oder Kombinationen der weiteren als günstig erachteten Ausführungsformen der Bearbeitungsmaschine realisierbar ist, sieht vor, dass zur Betätigung der vorgenannten Spannelemente ein Kraftübertragungsmittel vorgesehen ist, das die Spannelemente mit einem Zentralantrieb verbindet. Dieser Zentralantrieb wiederum wird, beispielsweise über den Adapteranschluss mit der Antriebswelle verbunden, der dann wiederum vermittelt über die Kraftübertragungsmittel die Betätigung der Spannelemente beziehungsweise der daran angeordneten beziehungsweise darin verschiebbaren Spannmittel und somit letztlich das Spannen des Werkstückes bewirkt. Zur Verbindung der Kraftübertragungsmittel mit dem Zentralantrieb beziehungsweise zur Kraftübertragung vom Zentralantrieb auf die Spannelemente kann beispielsweise eine Kette, ein Riemen oder aber ein entsprechend ausgebildetes Getriebe vorgesehen werden, dessen Antriebsritzel einerseits mit der Antriebswelle beziehungsweise dem daran angeordneten oder vorgesehenen Adapteranschluss und andererseits mit einem weiteren, beispielsweise an einer Spindel des Spannelementes vorgesehenen Ritzel kämmen und dabei eine Betätigung der Spannelemente beziehungsweise der daran angeordneten Spannmittel durchführt. Um ein übermäßiges, ggf. das Werkstück beschädigendes Spannen zur verhindern, kann das hier beschriebene Getriebe mit einer Rutschkupplung ausgebildet werden. Durch Überwachung der Kraftaufnahme des Antriebsmotors ist es dabei möglich, die einzelnen Spannzustände der Spannelemente zu überwachen und entsprechend zu beeinflussen. Über die Umkehr der Antriebsrichtung des Antriebsmotors kann ein Lösen beziehungsweise Festlegen der Werkstücke durch entsprechende Betätigung der Spannelemente beziehungsweise der Spannvorrichtung realisiert werden.

Bei einem Austausch der Spannvorrichtung gegen ein Drehfutter ist in einer oder mehreren möglichen Ausführungsformen beziehungsweise Kombinationen daraus bevorzugt vorgesehen, dass der den drehenden Teil des Drehfutters aufnehmende Futterkörper fest mit dem Werkstücktisch verbunden wird, um hier eine Aufnahme beziehungsweise ein Lager für den rotierenden Teil des Drehfutters zur Verfügung zu stellen. Der fest mit dem Werkzeugtisch verbundene Futterkörper weist in seinem Inneren dann wenigstens ein Lager für den rotierenden Teil des Drehfutters, das heißt die eigentliche Spindel, auf, die über den Adapteranschluss mit der Antriebswelle verbunden ist. Die Spindel des Drehfutters verfügt über Spannmittel, um das in Rotation zu versetzende Werkstück zu haltern.

Um eine den hohen auftretenden Kräften entsprechende Fixierung des Futterkörpers durchführen zu können, weist dieser entsprechende Verbindungsmittel auf, die mit dem Werkzeugtisch in Eingriff gebracht werden können. Der rotierende Teil des Drehfutters wird dann über ein den Werkzeugtisch durchgreifendes Verbindungsmittel mit dem Adapteranschluss an der Antriebswelle verbunden und somit unmittelbar über diesen drehbar.

Sowohl im Fall, dass eine Spannvorrichtung, wie zuvor beschrieben, an dem Werkzeugtisch angeordnet ist, wie auch in der alternativen Ausführungsform mit einem Drehfutter, wird es als günstig angesehen, wenn sich der Adapteranschluss zwischen den Abstützpunkten oder in der von den Abstützpunkten begrenzten Fläche befindet. Es wird hierdurch dann eine hochgenaue Zentrierung von Adapteranschluss und Kraftübertragungsmitteln der Spannvorrichtung beziehungsweise des Drehfutters möglich. Diese Ausführungsform ist jedoch nicht isoliert zu betrachten, sondern kann selbstverständlich im Zusammenhang mit weiteren Ausführungsformen sowie einzelnen Merkmalen, bevorzugten Ausführungsformen kombiniert, gleichwohl ebenfalls, realisiert werden.

Als besonders günstig wird im Zusammenhang mit sämtlichen Ausführungsformen beziehungsweise Kombinationen davon angesehen, wenn sich das Drehfutter auf dem Werkstückträger abstützt, wobei der Werkstückträger beziehungsweise ein an diesem vorgesehener Rundtisch eine Gleitfläche für das Drehfutter zur Verfügung stellt. Dies stellt die einfachste Art und Weise der Verwendung der Bearbeitungsmaschine gemäß der Erfindung mit einem Drehfutter dar. Es wird hierbei lediglich die Spannvorrichtung mit werkstücktragender Tragplatte und Kraftübertragungsmitteln vom Werkstückträger abgenommen, indem die entsprechenden Verbindungsmittel, die die Tragplatte mit dem Werkstückträger und die Kraftübertragungsmittel mit der Antriebswelle beziehungsweise dem daran angeordneten Adapteranschluss verbinden, gelöst werden. Es steht sodann der Werkstückträger für die Anordnung des Drehfutters zur Verfügung. Dieses wird über entsprechende Ankopplungspunkte an der Antriebswelle beziehungsweise dem Adapterstück oder Adapteranschluss angeordnet und steht dann für das Spannen von Werkstücken und für die rotatorische Bearbeitung zur Verfügung. Das Drehfutter selbst liegt dabei auf dem Werkstückträger auf, der dann eine Gleitfläche zur Verfügung stellt. Über entsprechende Schmierpunkte kann auch eine Schmierung des Drehfutters vorgesehen werden.

Eine weitere bevorzugte Ausführungsform der Bearbeitungsmaschine, die selbstverständlich auch im Zusammenhang beziehungsweise in Kombination mit sämtlichen, einzelnen oder weiteren Kombinationen zusätzlich bevorzugter Ausführungsformen gemäß den beigefügten Ansprüchen realisiert werden kann, sieht vor, dass das Drehfutter einen Futterkörper und eine drehende Spindel aufweist. Der Futterkörper stützt sich dabei insbesondere an mehreren Abstützpunkten auf dem Werkstückträger ab, während die Spindel im Futterkörper drehbar. gelagert ist. Der Futterkörper, der ein Lager für die Spindel bildet, wird dabei mit dem Werkstückträger lösbar fest verbunden. Diese Verbindung kann durch Eingriff und/oder Verschrauben von Futterkörper beziehungsweise Drehfutter und Werkstückträger beziehungsweise Rundtisch oder in sonstiger geeigneter Art und Weise erfolgen. Die Spindel, die in dem Futterkörper gelagert ist, wird mit der Antriebswelle verbunden, wofür wiederum ein entsprechender Adapteranschluss, der als Schnellverbindungsanschluss, Schnellkupplung, Klauenkupplung, Schraubverbindung oder Bajonettverschluss ausgebildet ist, zur Verfügung steht. Hierdurch wird dann ein besonders schnelles und einfaches Umrüsten der Bearbeitungsmaschine möglich, sodass der Werkstückträger hier nicht nur zum ortsfesten oder nahezu ortsfesten Anordnen von Werkstücken für eine Bearbeitung durch drehende Werkzeuge zur Verfügung steht, sondern vielmehr auch die Möglichkeit geschaffen wird, Werkstücke beziehungsweise Spannmittel, das heißt Spann- oder Drehfutter, hierfür zur Verfügung zu stellen, die eine Bearbeitung bei drehendem Werkstück erlauben.

In der zuvor beschriebenen Bearbeitungsmaschine beziehungsweise günstigen Ausführungsformen beziehungsweise Weiterbildungen ist eine Festlegung des Werkstückes in dem Drehfutter vorgesehen, um hier eine Bearbeitung bei rotierendem Werkstück durchzuführen. Um das Werkstück in dem Drehfutter festzulegen, ist hier insbesondere ein mechanisches, hydraulisches, pneumatisches, elektromechanisches, elektromagnetisches Spannen des Werkstückes in dem Drehfutter vorgesehen. Entsprechende Spannmittel, die auf die Backen des Drehfutters beziehungsweise das Werkstück wirken, können hierbei beispielsweise im Futterkörper untergebracht werden. Der Futterkörper kann dabei beispielsweise einen feststehenden Teil aufweisen, der die entsprechenden Spannmittel beziehungsweise die Antriebe für diese Spannmittel aufweist. Das Futter weist hierfür dann die notwendigen Betätigungsmittel auf.

Eine weitere, als günstig angesehene Ausführungsform der Bearbeitungsmaschine, auf die diese jedoch nicht beschränkt bleibt, sondern durch Kombination weiterer Ausführungsformen zusätzlich weitergebildet werden kann, sieht eine gemeinsame Steuerung für die zuvor beschriebenen Anwendungsfälle, das heißt für die Verwendung einer Spannvorrichtung zum ortsfesten Festlegen eines Werkstückes sowie für die Verwendung der Bearbeitungsmaschine für die Bearbeitung eines drehenden Werkstückes vor. Als besonders günstig erweist es sich, wenn hierzu in der Bearbeitungsmaschine eine gesonderte Steuerung vorgesehen ist beziehungsweise die Steuerung für die jeweiligen Anwendungsfälle, das heißt zur Betätigung der Spannvorrichtung beziehungsweise des Drehfutters durch die Steuerung der Bearbeitungsmaschine zur Verfügung gestellt wird. Herkömmliche Bearbeitungsmaschinen verfügen über ausreichende Resourcen, um hier zusätzliche Steuerungen in bereits bestehende Maschinensteuerungen zu integrieren und über Betätigungselemente, die in der Regel an der Bearbeitungsmaschine beziehungsweise deren Steuerung vorgesehen sind, um eine weitere Steuerung den entsprechenden Elementen der Bearbeitungsmaschine beizuordnen.

Im Zusammenhang mit der in der Bearbeitungsmaschine beziehungsweise den Weiterbildungen vorgesehenen Steuerung wird es als vorteilhaft angesehen, wenn das Spannen des Werkstückes in der Spannvorrichtung und/oder in dem Drehfutter durch die Steuerung steuerbar ist. Hierbei können dann Spannparameter wie Spanndruck, Spanngeschwindigkeit und dergleichen über die Steuerung gesteuert und somit eine optimale Zentrierung der Werkstücke sowie die optimale Ausnutzung der Bearbeitungsmaschine durchgeführt werden. Auch steuerbar sind die Bearbeitungsparameter wie beispielsweise Einsatz des Werkzeuges, Anstellen des Werkzeuges am drehenden Werkstück oder Lösen beziehungsweise Spannen des Werkstückes in der ebenfalls in der Bearbeitungsmaschine verwendbaren Spannvorrichtung.

Eine weitere als vorteilhaft angesehene Ausführungsform der Bearbeitungsmaschine, die auch im Zusammenhang mit weiteren vorteilhaften Weiterbildungen der Bearbeitungsmaschine verwirklicht werden kann, zeichnet sich dadurch aus, dass ein Festlegen oder Lösen der Spannvorrichtung beziehungsweise des Drehfutters und/oder der daran angeordneten Spannbacken automatisch, manuell oder aber nur teilweise automatisch beziehungsweise teilweise manuell durchführbar ist. Die Bearbeitungsmaschine beziehungsweise in dieser vorgesehene geeignete Elemente bewirken dann ein Festlegen oder Lösen der Spannvorrichtung beziehungsweise des Drehfutters, wenn dies beispielsweise seitens der Steuerung vorgegeben wird. Daneben besteht auch die Möglichkeit, dass hier ein Nutzer eingreift und einen entsprechenden Mechanismus zum Festlegen oder Lösen der Spannvorrichtung beziehungsweise des Drehfutters auslöst beziehungsweise betätigt und hernach die entsprechenden Maschinenteile manuell entnimmt beziehungsweise in die entsprechenden Aufnahmen einsetzt.

Im Zusammenhang mit dem automatischen beziehungsweise manuellen Festlegen oder Lösen der Spannvorrichtung sieht eine bevorzugte Ausführungsform der Bearbeitungsmaschine beziehungsweise die Kombination von Ausführungsformen vor, dass ein automatisches oder manuelles Eingreifen des Adapteranschlusses in der Spannvorrichtung und/oder dem Drehfutter vorgesehen ist. Dieses Eingreifen kann wiederum durch die Maschinensteuerung realisiert werden, aber es besteht auch die Möglichkeit, dass hier eine entsprechende Bedienung des Adapteranschlusses stattfindet.

Als günstig wird angesehen, wenn der Adapteranschluss Mittel zum Festlegen und/oder Lösen der Spannvorrichtung beziehungsweise des Drehfutters aufweist. Derartige Mittel können beispielsweise die vorher bereits genannten Schnellverbindungsanschlüsse, eine Schnellkupplung, eine Klauenkupplung, eine Schraubverbindung oder ein Bajonettverschluss sein. Diese wiederum können dabei sowohl manuell als auch automatisch betätigt werden. Die Mittel sind dabei derart für den Benutzer zugänglich, dass die manuelle Betätigung möglich ist.

Aufgrund der vorgenannten automatischen sowie manuellen Bedienungsmöglichkeit, die die Bearbeitungsmaschine zur Verfügung stellt, kann diese vielseitig eingesetzt werden und eignet sich für die Ausführung als kleine, mittlere und große Maschine, das heißt für den großindustriellen Einsatz ebenso wie für einen Einsatz in der kleinen Serienfertigung oder in kleineren Betrieben.

Die Bearbeitungsmaschine weist somit einen Mehrfachnutzen auf und ermöglicht eine effizientere Ausnutzung der Bearbeitungsmaschine.

Die zuvor beschriebenen Ausführungsformen bilden alleine, in Kombination und/oder in Kombination einer oder mehrerer Merkmale der Ausführungsformen den Gegenstand weiter und dienen zur Lösung der eingangs gestellten Aufgabe, so wie in den beigefügten Ansprüchen definiert.

In der Zeichnung ist die Erfindung insbesondere in Ausführungsbeispielen schematisch dargestellt. Es zeigen:
- Fig. 1: eine Seitenansicht der erfindungs-gemäßen Bearbeitungsmaschine,
- Fig. 2: ein in der erfindungsgemäßen Bearbeitungsmaschine verwendbares Drehfutter in Seitenansicht und
- Fig. 3: eine Seitenansicht einer weiteren Ausführungsform der erfindungsgemäßen Bearbeitungsmaschine.

In den Figuren sind gleiche oder einander entsprechende Elemente jeweils mit den gleichen Bezugszeichen bezeichnet und werden daher, sofern nicht zweckmäßig, nicht erneut beschrieben.

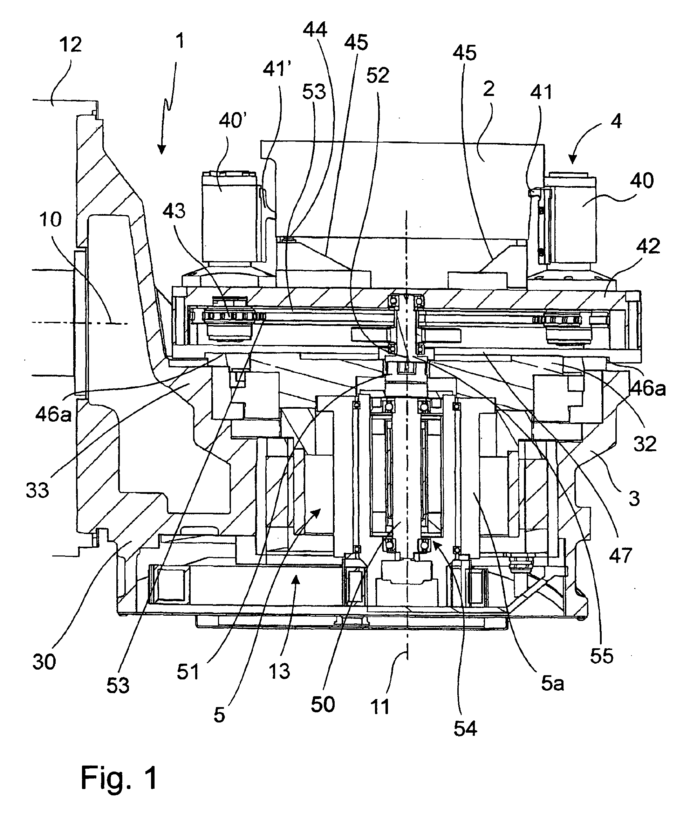

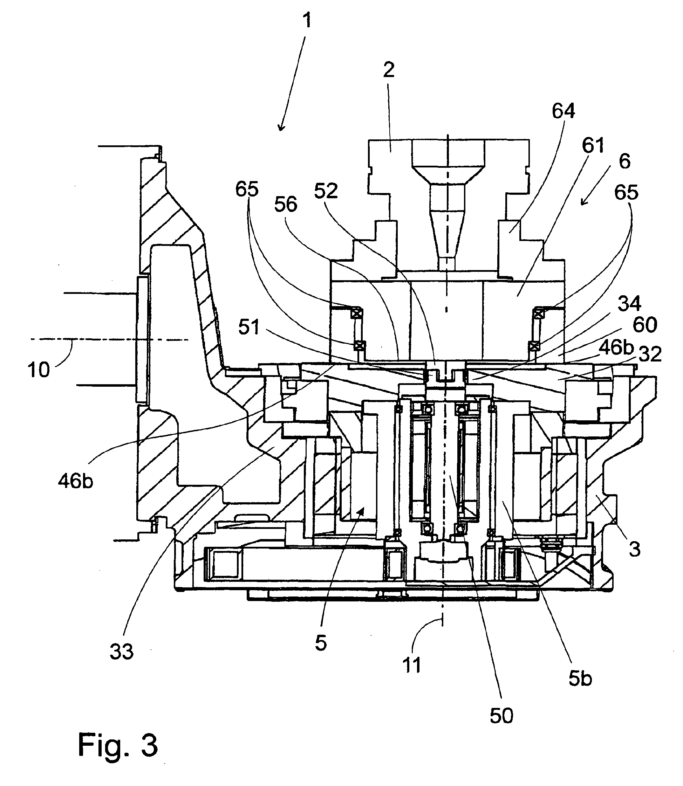

In Fig. 1 ist die Bearbeitungsmaschine 1 schematisch gezeigt. Diese umfasst zum Einen einen Werkstücktisch 3, der einen einen Rundtisch 32 zur Verfügung stellenden Werkstückträger 33 aufweist. Der Rundtisch 32 stellt dabei eine Auflagefläche für eine Spannvorrichtung 4 beziehungsweise ein Dreh- oder Backenfutter 6 (vgl. Fig. 3) zur Verfügung.

In Fig. 1 nicht gezeigt ist das Bearbeitungswerkzeug, das zum Beispiel als drehender Bohrer oder Fräser ausgebildet, von einer Werkzeugspindel angetrieben und in geeigneter Weise relativ zu dem Werkstück 2 bewegbar ist. Neben einer bewegbaren Ausführung des Werkzeuges beziehungsweise des Werkzeuges mit einer drehbaren Werkzeugspindel, besteht selbstverständlich auch die Möglichkeit, dass das Werkzeug selbst feststehend beziehungsweise nicht drehbar, beispielsweise als Drehmeißel oder Stemmer ausgebildet ist und sich stattdessen das Werkstück 2, das dann in einem Dreh- oder Backenfutter 6 gespannt ist, bewegt.

Die Bearbeitungsmaschine 1 nach der Erfindung besitzt eine Mehrzahl von Achsen. In der in den Fig. 1 und 3 dargestellten Ausführungsform der Bearbeitungsmaschine 1 ist vorgesehen, um eine möglichst flexible Bearbeitung des Werkstückes 2 zu erreichen, dieses relativ zu einem Bearbeitungswerkzeug entlang von drei Raumachsen zu positionieren. Neben den Longitudinalachsen sind auch Rotationsachsen vorgesehen. Eine erste Rotationsachse ist mit dem Bezugszeichen 10 gekennzeichnet. Sie ermöglicht eine Drehung des Werkstücktisches 3 um eine horizontal orientierte Drehachse 10. Dabei ist die Anordnung so gewählt, dass der Werkstücktisch 3 eine Konsole 30 aufweist, die zum Beispiel einseitig an einem Schlitten oder einer Säule 12 angeordnet ist. Bei einer schlittenartigen Ausgestaltung ist dann zum Beispiel auch eine Bewegung in vertikaler Richtung, das heißt rechtwinklig zur Rotationsachse 10 möglich.

Des Weiteren ist vorgesehen, dass das Werkstück 2 um eine in Fig. 1 und 3 vertikal orientierte weitere Drehachse 11 drehbar ist. Da die Ausrichtung dieser Drehachse abhängig ist von der Stellung der Konsole 30 um die Drehachse 10 ist natürlich die zweite Drehachse 11 nicht festgelegt. Sie steht allerdings rechtwinklig auf der ersten Rotationsachse 10.

Für eine Drehung des Werkstückes 2 um die zweite Achse 11 ist an der Bearbeitungsmaschine 1 ein bevorzugt elektrisch ausgeführter Drehantrieb 13 vorgesehen. Im Ausführungsbeispiel der Fig. 1 und 3 wird die Rotationsmöglichkeit des Werkstücktisches 3 um verschiedene Raumachsen 10, 11 gezeigt. Selbstverständlich kann die erfindungsgemäße Ausführung einer Bearbeitungsmaschine auch realisiert werden, wenn eine solche Rotationsmöglichkeit nicht oder nur teilweise vorgesehen ist, das heißt, der Werkstücktisch 3 zum Beispiel nur entlang der Längsachsen beweglich oder komplett festgehalten also ortsfest ausgebildet ist. Die Erfindung ist sofern frei bei der Aufteilung der verschiedenen Bewegungs- oder Rotationsachsen auf die Positionierung des Werkstückes 2 oder des Bearbeitungswerkzeuges.

Anstelle der hier gezeigten konsolenartigen Ausgestaltung des Werkstücktisches 3 ist natürlich auch eine portalartige Ausgestaltung möglich.

Im Ausführungsbeispiel der Fig. 1 ist die erfindungsgemäße Bearbeitungsmaschine mit ruhendem Werkstück 2 gezeigt. Das zu bearbeitende Werkstück 2 ist hier mit Hilfe der Spannvorrichtung 4 auf einer Tragplatte 42 aufgespannt. Diese Tragplatte 42 ist Bestandteil der in der erfindungsgemäßen Bearbeitungsmaschine 1 austauschbaren beziehungsweise vom Werkstücktisch 3 abnehmbaren Spannvorrichtung 4. Auf der Tragplatte 42 weist die Spannvorrichtung 4 mehrere Spannelemente 40, 40' auf. Die einzelnen Spannelemente 40, 40' sind im Wesentlichen gleichartig ausgebildet und besitzen eine seitlich vorstehende Spannpratze 41, 41', die längsbeweglich an dem Spannelement 40, 40' vorgesehen ist. Die Spannpratze 41, 41' greift an definierten Positionen am Werkstück 2 ein und presst dieses während der Bearbeitung auf die Tragplatte 42. Neben dieser unmittelbaren Verbindung ist es natürlich auch möglich, dass die Spannpratze 41, 41' mittelbar das Werkstück 2 hält, zum Beispiel, wenn das Werkstück 2 auf einem Werkstückträger oder einer Palette oder ähnlichem befestigt ist. Unterhalb des Werkstückes 2 sind Lagerklötze 45 auf der Tragplatte 42 angeordnet, die einen Lagerpunkt 44 mit definierter Lagerposition für das Werkstück 2 zur Verfügung stellen. Die Lagerklötze 45 sind ebenfalls auf der Tragplatte 42 befestigt. Die Tragplatte 42 selbst stützt sich über die Abstützpunkte 46a auf den Werkzeugtischen 3 beziehungsweise dem Werkstückträger 33 ab.

Die Spannpratzen 41, 41' sind rechtwinklig zur Ebene der Tragfläche 42 längsbeweglich. Diese Längsbewegung wird beispielsweise durch einen Spindelantrieb in dem Spannelement 40, 40' realisiert, bei welchem die Spannpratzen 41, 41' Teile von Spindelmuttern sind, die auf einer angetriebenen Spindel laufen. Koaxial auf diesen Spindeln sind Zahnräder 43 vorgesehen, welche über ein Kraftübertragungsmittel 53 mit einem Zentralantrieb 55 verbunden sind. Das Kraftübertragungsmittel 53 kann beispielsweise in Form einer Kette oder dergleichen zur Verfügung gestellt werden. Die Ausgestaltung und Führung des Übertragungsmittels 53 ist dabei so gewählt, dass alle Spannelemente 40, 40' in gleicher Weise von dem Zentralantrieb 55 angetrieben werden. Der Zentralantrieb 55 wiederum steht über ein Motorwellenanschlussstück 52 mit einem die Antriebskraft zur Verfügung stellenden Antriebsmotor 5 in Verbindung, der bevorzugt als Elektromotor 5a oder Hydraulikmotor 5b ausgebildet ist. Dieser Antriebsmotor 5 treibt eine Antriebswelle 50 an, die über einen Adapteranschluss 51 mit dem Motorwellenanschlussstück 52 des Zentralantriebes 55 der Spannvorrichtung 4 verbunden ist. Der Antriebsmotor 5 dient im Ausführungsbeispiel der Fig. 1 als Antrieb für die Spannvorrichtung 4. Der mit dem Antriebsmotor 5 verbundene Zentralantrieb 55 weist dementsprechend ein Antriebsritzel und/oder ein Getriebe auf, das eine Kraftübertragung vom Antriebsmotor 5 auf die Kraftübertragungsmittel 53 bewirkt. Dabei ist es günstig, dass durch eine Umsteuerung der Rotationsrichtung des Antriebsmotors 5 die Öffnungs- und Schließbewegung der Spannpratzen 41, 41' beeinflussbar ist. Der Zentralantrieb 55 sowie die Kraftübertragungsmittel 53 und die Antriebsritzel und/oder das Getriebe 54 sind dabei in der Tragplatte 42 aufgenommen und als bedarfsweise vom Werkstücktisch 3 beziehungsweise dem Werkstückträger 33 entnehmbare Einheit ausgebildet. Durch Lösen des Zentralantriebes 55 von der Antriebswelle 50 des Antriebsmotors 5 kann die gesamte Spannvorrichtung 4, das heißt die den Zentralantrieb 55, die Kraftübertragungsmittel 53 und die entsprechenden Antriebsritzel beziehungsweise das Getriebe umfassende Tragplatte 42, die darauf angeordneten Spannelemente 40, 40' sowie die an diesem vorgesehenen Spannpratzen 41, 41' von der Bearbeitungsmaschine 1 beziehungsweise am Werkstück 3 entnommen werden. Nach Entnahme der Spannvorrichtung 4 verbleibt lediglich der Werkzeugträger 33 mit darin vorgesehenem Rundtisch 32 am Werkstücktisch 3. Im Rundtisch 32 zentral angeordnet ist der Adapteranschluss 51, der wahlweise für die Anordnung der Spannvorrichtung 4 beziehungsweise eines Dreh- oder Backenfutters 6 zur Verfügung steht. Der Adapteranschluss 51 befindet sich dabei zwischen den Abstützpunkten 46a beziehungsweise in der von diesen begrenzten Fläche 47. Ein Vorteil der Bearbeitungsmaschine 1 ist, dass als zentraler Bestandteil der Erfindung der Einsatz eines Motors, bevorzugt eines Elektro- 5a oder Hydraulikmotors 5b, in nächster Nähe zum Werkstück 2 vorgesehen ist. Die vom Motor 5 angetriebene Antriebswelle 50 wirkt dabei möglichst direkt zum Beispiel über die Antriebswelle 50 selbst, über ein Getriebe, ein sonstiges Kraftübertragungsmittel 53 oder über eine Hydraulikleitung auf die bedarfsweise an der Bearbeitungsmaschine ansetzbare Spannvorrichtung ein und prägt eine entsprechende Spannkraft in die Spannelemente 40, 40' der Spannvorrichtung 4 ein, sodass das Werkstück 2 sicher gehaltert werden kann. Alternativ kann zur Kraftübertragung vom Antrieb 5 auf die Antriebswelle 50 ein zusätzliches Getriebe 54 vorgesehen werden.

In der Spannvorrichtung ist zwischen der Spindel in dem Spannelement 40, 40' (nicht dargestellt) und dem Kettenantrieb, das heißt dem Zentralantrieb 55 und den damit verbundenen Kraftübertragungsmitteln 53 beziehungsweise den den Spannelementen 40, 40' zugeordneten Zahnrädern oder sonstigen Elementen, eine Rutschkupplung vorgesehen, in welcher die Spannkraft des Spannelementes 40, 40' begrenzbar ist. Die Spannkraft wird dabei durch ein selbsthemmendes Getriebe, einen selbsthemmenden Motor oder eine sonstige Bremse aufrechterhalten.

Durch Überwachung der Kraftaufnahme des Antriebsmotors ist es dabei möglich, die einzelnen Spannzustände der Spannelemente 40, 40' zu überwachen und entsprechend zu beeinflussen. An den Pratzenantrieben sowie den Getrieberitzeln ist ein Freilauf vorgesehen, um das Wiederöffnen der Spannelemente 40, 40' zu erreichen.

Die gesamte Spannvorrichtung 4 kann vom Werkstücktisch entnommen werden, sodass am Werkstücktisch 3 nur noch der Rundtisch 32 des Werkstückträgers 33 sowie die Antriebswelle 50 und der dieser zugeordnete Antriebsmotor 5 verbleibt und für die Anordnung weiterer alternativer Elemente der erfindungsgemäßen Bearbeitungsmaschine 1 zur Verfügung steht. Über den Adapteranschluss 51 kann ein Dreh- oder Backenfutter 6 angeordnet werden, in welchem dann ein Werkstück 2 einspannbar ist. Die erfindungsgemäße Bearbeitungsmaschine 1 ermöglicht somit ein kurzfristiges Umrüsten von Fräsbearbeitung auf Drehbearbeitung und umgekehrt.

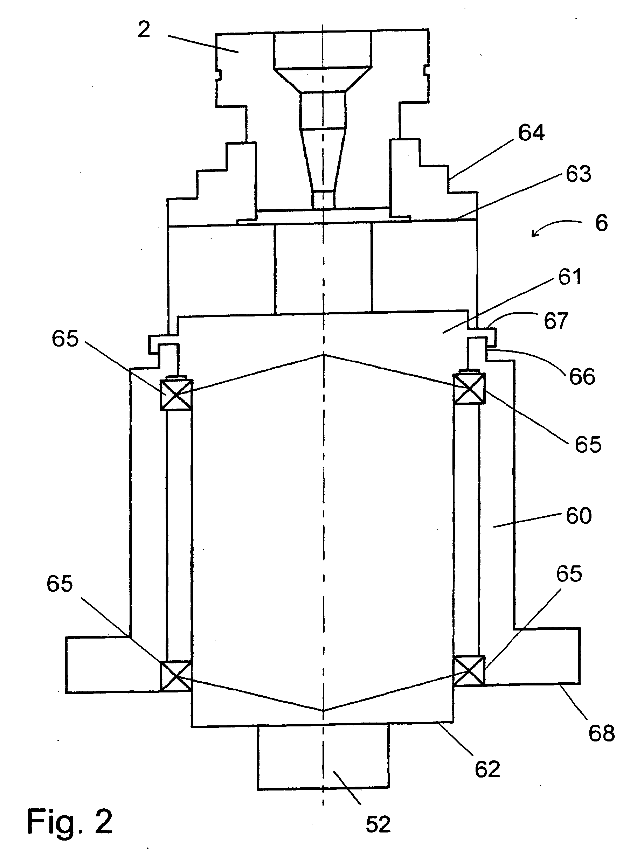

Ein Dreh- oder Backenfutter 6 ist in Fig. 2 gezeigt. Dieses umfasst im Ausführungsbeispiel der Fig. 2 einen Futterkörper 60, der fest mit dem Rundtisch 32 (vgl. Fig. 3) verbindbar ist und als Aufnahme für die drehbare Spindel 61 des Dreh- oder Backenfutters 6 dient. Die Spindel 61 ist im Ausführungsbeispiel der Fig. 2 über zwei Lager 65 im Inneren des Futterkörpers gelagert und weist an ihrer im Montagezustand dem Werkstücktisch 3 beziehungsweise dem Rundtisch 32 zugewandten unteren Ende 62 ein Motorwellenanschlussstück 52 auf. Dieses Motorwellenanschlussstück 52 wird bei Montage des Futters mit dem Adapteranschluss 51 der Antriebswelle 50 in Eingriff gebracht, sodass ein unmittelbarer Antrieb der Spindel 61 durchgeführt werden kann. An ihrem dem Motorwellenanschlussstück 52 gegenüberliegenden oberen Ende 63 weist die Spindel 61 Backen 64 auf, die zum Spannen eines Werkstückes 2 in oder an der Spindel 61 dienen. Das hier dargestellte Dreh- oder Backenfutter 6 kann als Zwei-, Drei- oder Mehrbackenfutter ausgebildet werden und stellt somit eine Vielzahl von Spannmöglichkeiten für verschiedenste Werkstücke 2 zur Verfügung. Im Futterkörper 60 angeordnet befinden sich zwei Lager 65, die in Fig. 2 stark schematisiert dargestellt sind. Es kann sich hierbei um Kugel-, Gleit- oder Wälzlager handeln. Der den Futterkörper 60 überragende Teil der Spindel 61 weist zudem den oberen Rand 66 des Futterkörpers 60 übergreifende Vorsprünge 67 auf, über die die Zentrierung der Spindel 61 im Futterkörper 60 verbessert wird. Hier wird somit die Möglichkeit zur hochgenauen Bearbeitung der gehalterten Werkstücke 2 möglich. Der Futterkörper 60 ist über entsprechende Haltemittel (in Fig. 2 nicht dargestellt) mit dem Rundtisch 32 verbindbar. Die Haltemittel sind dabei so ausgeführt, dass auch bei hohen Drehzahlen und damit hohen auf das Dreh- oder Backenfutter 6 einwirkenden Kräften ein dauerhafter und positionstreuer Anschluss des Dreh- oder Backenfutters 6 am Rundtisch 32 gewährleistet ist. Die Auflageflächen 68 zwischen Futterkörper 60 und Rundtisch 32 sind dabei ausreichend groß gewählt, um diesen Sitz zu garantieren. Der Rundtisch 32 kann bei einer einfacheren Ausführung des Dreh- oder Backenfutters 6, das nur mit der Antriebswelle 50 verbunden ist, als Gleitfläche 56 für das rotierende Futter dienen, dass sich ohne weitere Befestigung am Rundtisch abstützt.

Fig. 3 zeigt eine weitere bevorzugte Ausführungsform der erfindungsgemäßen Bearbeitungsmaschine 1. Diese umfasst die bereits im Zusammenhang mit Fig. 1 beschriebenen Bestandteile und Funktionalitäten. Anstelle der dort gezeigten Spannvorrichtung 4 weist die in Fig. 3 dargestellte Bearbeitungsmaschine 1 ein auf dem Werkstücktisch 3 beziehungsweise dem Werkstückträger 33 angeordnetes in Fig. 2 gezeigtes Dreh- oder Backenfutter 6 auf. Dieses stützt sich an dem im Werkzeugträger 33 vorgesehenen Rundtisch 32 über Abstützpunkte 46b ab. Das Dreh- oder Backenfutter 6 weist einen Motorwellenanschlussstück 52 auf, der in eine Ausnehmung 34 im Rundtisch 32 eingeführt und mit einem Adapteranschluss 51 der Antriebswelle 50 verbunden ist. Hierüber erfolgt dann eine Kraftübertragung von dem ebenfalls im Werkstücktisch 3 aufgenommenen Antriebsmotor 5. Neben der Verwendung eines Elektromotors 5a als Antriebsmotor 5 besteht selbstverständlich auch die Möglichkeit hier eine Hydraulikmotor 5b als Antrieb 5 für die Antriebswelle 50 beziehungsweise das daran angeordnete Dreh- oder Backenfutter 6 vorzusehen. Das Dreh- oder Backenfutter 6 weist einen Futterkörper 60 auf, der fest mit dem Rundtisch 32 verbunden, bevorzugt in diesen eingeschraubt oder in sonstiger geeigneter Art und Weise mit diesem verspannt ist. Im Futterkörper 60 vorgesehen sind Lager 65, über die die Spindel 61 des Dreh- oder Backenfutters 6 drehbar im Futterkörper 60 gelagert ist. Die Lager 65 sind im Ausführungsbeispiel der Fig. 3 schematisch dargestellt und können als Kugel-, Gleit- oder Wälzlager oder in sonstiger geeigneter Art und Weise ausgebildet sein. In der Spindel 61 angeordnet befinden sich Backen 64 zum Spannen des Werkstückes 2. Auch bezüglich der Backen 64 besteht hier die Möglichkeit verschiedenste Backenformen sowie unterschiedliche Backenzahlen an der Spindel 61 vorzusehen.

Wie zuvor im Zusammenhang mit der Fig. 1 beschrieben, erlaubt die erfindungsgemäße Bearbeitungsmaschine 1 eine Demontage der Tragplatte 42 mit daran beziehungsweise darin angeordneter Spannvorrichtung 4 von dem Werkstücktisch 3. An dem dem Antriebsmotor 5 entfernt liegenden Ende der Antriebswelle 50 befindet sich nach Entnahme der Tragplatte 42 der freiliegende Adapteranschluss 51. In diesen steht das Motorwellenanschlussstück 52 des Dreh- oder Backenfutters 6 in gleicher Weise ein und kann über entsprechende Anschlussmittel mit der Antriebswelle 50 verbunden werden.

Das Dreh- oder Backenfutter 6 ist im Übrigen wie üblich ausgebildet und erlaubt ein radiales Ergreifen des Werkstückes 2. Wie in Fig. 3 dargestellt, liegt der Futterkörper 60 des Drehoder Backenfutters 6 auf dem Rundtisch 32 des Werkstücktisches 3 auf und wird in geeigneter Weise durch zusätzliche Verbindungs- oder Befestigungsmittel mit diesem verbunden. Daneben besteht jedoch auch die Möglichkeit, dass der Rundtisch 32 eine Gleitfläche 56 für den Futterkörper 60 zur Verfügung stellt und keine gesonderte, im Futterkörper 60 gelagerte Spindel 61 vorgesehen ist, sondern das Spannen des Werkstückes 2 direkt über die für den Futterkörper 60 geführten Backen 64 erfolgt.

Durch die Rotation der Antriebswelle 50 wird die drehbar gelagerte Spindel 61 in Rotation versetzt. Ein in der Bearbeitungsmaschine 1 ggf. vorgesehenes feststehendes Werkzeug, beispielsweise ein Drehmeißel oder Stemmer, kann dann gegen das Werkstück 2 angestellt werden und trägt dann Material ab. Durch eine entsprechend Lageveränderung des Werkzeuges kann dann eine entsprechende Bearbeitung des Werkstückes 2 durchgeführt werden. Beim Anstellen des Werkzeuges an das Werkstück 2 kann dessen Position auch durch eine entsprechende Ausrichtung des Werkstücktisches, über die Rotationsachsen 10, 11, die im Zusammenhang mit Fig. 1 beschrieben wurden, erfolgen, sodass eine optimale Ausrichtung des Werkstückes 2 gegenüber dem Werkzeug gegeben ist. Hierdurch wird dann die optimale Bearbeitungsposition festgelegt und die Vielseitigkeit der erfindungsgemäßen Bearbeitungsmaschine 1 unterstrichen.

Die Erfindung wird unter Anderem im Zusammenhang mit einem allgemein als Elektromotor 5a bezeichneten Antrieb beschrieben. Dabei kann es sich auch um einen Synchron-, Asynchron- oder Gleichstrommotor handeln. Der Synchronmotor kann als geberloser Synchronmotor und hierbei als Permanentmagnet erregter Synchronmotor ausgebildet sein und eine geberlose Rotorlage beziehungsweise Stillstandslageerkennung zulassen.

Obwohl die Erfindung an Hand von genauen Ausführungsbeispielen beschrieben wurde, die im weitestgehenden Detail dargelegt sind, so wird darauf hingewiesen, daß dies nur zur Erläuterung dient und daß die Erfindung sich nicht notwendigerweise darauf beschränkt, da alternative Ausführungsbeispiele und Vorgehensweisen für Fachleute mit Hinblick auf die Veröffentlichung gemäß den beigefügten Ansprüchen möglich wird.

## Patentansprüche

1. Bearbeitungsmaschine (1) für das Bearbeiten wenigstens eines Werkstückes (2), mit einem Werkstückträger (33), welcher das Werkstück (2) trägt, einem Kraftübertragungsmittel (53) für eine zum mittelbaren oder unmittelbaren Festspannen des Werkstückes (2) dienende Spannvorrichtung (4) und einem Drehfutter (6) zur mittelbaren oder unmittelbaren Aufnahme des Werkstückes (2) für eine rotatorische Schleif- oder Drehbearbeitung am Werkstück (2), wobei der Werkstückträger (33) eine von einem Antrieb (5) angetriebene Antriebswelle mit einem als Schnellverbindungsanschluss, Schnellkupplung, Klauenkupplung, Schraubverbindung oder Bajonettanschluss ausgebildeten Adapteranschluss (51) zum Verbinden mit dem Kraftübertragungsmittel (53) oder dem Drehfutter (6) aufweist, und wobei die Bearbeitungsmaschine (1) einen ersten und einen zweiten Anwendungsfall aufweist, und in dem ersten Anwendungsfall eine Verbindung der Antriebswelle (50) mit dem Kraftübertragungsmittel (53) vorgesehen ist und der Arntrieb (5) in diesem Anwendungsfall für eine Betätigung der Spannvorrichtung (4) vorgesehen ist und in dem zweiten Anwendungsfall eine Verbindung der gleichen Antriebswelle (5) mit dem Drehfutter (6) zur mittelbaren oder unmittelbaren Aufnahme des Werkstückes (2) für eine rotatorische Schleif- oder Drehbearbeitung am Werkstück (2) vorgesehen ist und der Antrieb in diesem Anwendungsfall für eine Rotation des Werkstückes (2) vorgesehen ist, wobei die Bearbeitungsmaschine (1) für eine Bearbeitung mit rotatorischem Bearbeitungswerkzeug und einer Drehbearbeitung oder umgekehrt verwendbar ist und beide Anwendungsfälle mit der gleichen Bearbeitungsmaschine realisierbar sind.

2. Bearbeitungsmaschine nach Anspruch 1, **dadurch gekennzeichnet, dass** der Werkstückträger (33) im Raum feststehend ausgebildet ist.

3. Bearbeitungsmaschine nach Anspruch 1, **dadurch gekennzeichnet, dass** der Werkstückträger (33) entlang zumindest einer Achse (10, 11) bewegbar und/oder drehbar ist.

4. Bearbeitungsmaschine nach einem der vorhergehenden Ansprüche, **dadurch gekennzeichnet, dass** der Antrieb (5) direkt oder indirekt, zum Beispiel über ein Getriebe (54), auf die Antriebswelle (50) wirkt und/oder als Antrieb (5) ein Elektromotor beziehungsweise Servomotor oder Hydraulikmotor vorgesehen ist.

5. Bearbeitungsmaschine nach Anspruch 4, **dadurch gekennzeichnet, dass** der Elektromotor (5c) beziehungsweise Servomotor, als Synchron-, Asynchron- oder Gleichstrommotor, bevorzugt als geberloser Synchron- oder Synchronmotor und/oder als Permanentmagnet erregter Synchronmotor (PMSM) ausgebildet ist, insbesondere wobei in dem Synchronmotor eine geberlose Rotorlagebestimmung, bevorzugt eine geberlose Stillstandslageerkennung vorgesehen ist und/oder die Rotorlagebestimmung software- oder NC-gesteuert durchführbar ist.

6. Bearbeitungsmaschine nach einem der vorhergehenden Ansprüche, **dadurch gekennzeichnet, dass** der Adapteranschluss (51) zwischen am Werkstückträger (33) vorgesehenen Abstützpunkten (46a) oder in einer von den Abstützpunkten (46a) begrenzten Fläche (47) angeordnet ist.

7. Bearbeitungsmaschine nach einem der vorhergehenden Ansprüche, **dadurch gekennzeichnet, dass** die Spannvorrichtung (4) eine das Werkstück (2) tragende Tragplatte (42) aufweist, und sich die Tragplatte (42) an mehreren Abstützpunkten (46a), die auf dem Werkstückträger (33) vorgesehen sind, oder einem in dem Werkstückträger (33) vorgesehenen Rundtisch (32) abstützt, oder mit diesem verbunden ist.

8. Bearbeitungsmaschine nach einem der vorhergehenden Ansprüche, **dadurch gekennzeichnet, dass** die Spannvorrichtung (4) wenigstens ein Spannelement (40, 40') aufweist, und das Spannelement (40, 40') über die in der Spannvorrichtung (4) vorgesehenen Kraftübertragungsmittel (53) betätigbar ist und/oder die Spannelemente (40, 40') über die Kraftübertragungsmittel (53) mit einem Zentralantrieb (55) verbindbar sind, wobei der Zentralantrieb (55) mit der Antriebswelle (50) verbunden ist.

9. Bearbeitungsmaschine nach einem der vorhergehenden Ansprüche, **dadurch gekennzeichnet, dass** sich das Drehfutter (6) an dem Werkstückträger (33) bzw. dem in dem Werkstückträger (33) vorgesehenen Rundtisch (32) abstützt, wobei der Werkstückträger (33) bzw. der Rundtisch (32) eine Gleitfläche (56) für das Drehfutter (6) zur Verfügung zu stellen vermag und/oder das Drehfutter (6) einen sich auf dem Werkstückträger (33), insbesondere an mehreren Abstützpunkten (46b) abstützenden oder mit diesem verbundenen Futterkörper (60) und eine in dem Futterkörper (60) drehbar gelagerte Spindel (61) aufweist, wobei die Spindel (61) mit dem Adapteranschluss (51) und/oder der Antriebswelle (50) verbindbar ist.

10. Bearbeitungsmaschine nach einem der vorhergehenden Ansprüche, **dadurch gekennzeichnet, dass** ein mechanisches, hydraulisches, pneumatisches, elektromechanisches und/oder elektromagnetisches Spannen bzw. Lösen des Werkstückes (2) in dem Drehfutter (6) vorgesehen ist.

11. Bearbeitungsmaschine nach einem der vorhergehenden Ansprüche, **dadurch gekennzeichnet, dass** eine gemeinsame Steuerung für die Anwendungsfälle vorgesehen ist, insbesondere wobei die Steuerung als gesonderte Steuerung vorgesehen ist oder durch die Steuerung der Bearbeitungsmaschine (1) zur Verfügung gestellt ist.

12. Bearbeitungsmaschine nach einem der vorhergehenden Ansprüche, **dadurch gekennzeichnet, dass** das Spannen des Werkstückes (2) in der Spannvorrichtung (4) beziehungsweise in dem Drehfutter (6) durch die Steuerung steuerbar ist.

13. Bearbeitungsmaschine nach einem der vorergehenden Ansprüche, **dadurch gekennzeichnet, dass** ein Festlegen oder Lösen der Spannvorrichtung (4) bzw. des Drehfutters (6) automatisch, manuell oder teilweise automatisch bzw. teilweise manuell durchführbar ist.

14. Bearbeitungsmaschine nach einem der vorhergehenden Ansprüche, **dadurch gekennzeichnet, dass** ein automatisches oder manuelles Eingreifen des Adapteranschlusses (51) an der Spannvorrichtung (4) beziehungsweise dem Drehfutter (6) vorgesehen ist und/oder der Adapteranschluss (51) Mittel zum Festlegen und/oder Lösen der Spannvorrichtung (4) bzw. des Drehfutters (6) aufweist.

15. Verwendung einer Bearbeitungsmaschine nach einem der Ansprüche 1 bis 14 für die wahlweise Bearbeitung eines Werkstückes mit rotatorischem Bearbeitungswerkzeug oder in einer Drehbearbeitung.

## Claims

1. Machine tool (1) dedicated to process at least one workpiece (2), having a workpiece holder (33) carrying the workpiece (2), a power transmission means (53) for a clamping device (4) serving for directly or indirectly clamping the workpiece (2) and a chuck (6) for directly or indirectly receiving the workpiece (2) for a rotational grinding or turning processing of the workpiece (2), wherein the workpiece holder (33) has a drive shaft driven by a motor (5) with an adapter connector (51) configured as a quick connection, a quick coupling, a claw coupling, a screw connection or a bayonet connection for connecting with the power transmission means (53) or with the chuck (6) and wherein the machine tool (1) has a first and a second use case and, wherein in the first use case a connection of the drive shaft (50) with the power transmission means (53) is provided, with the drive (5) being used in this case for the activation of the clamping device (4), and wherein in the second use case a connection of the same drive shaft (5) with the chuck (6) for a direct or indirect reception of the workpiece (2) for a rotational grinding or turning processing of the workpiece (2) is provided with the drive (5) being used in this case to drive the rotation of the workpiece (2), wherein the machine tool (1) can be used for machining with a rotational machining tool and for a rotational processing or vice versa and both types of application can be realized with the same machine tool.

2. Machine tool according to claim 1, **characterized in that** the workpiece holder (33) is configured stationary.

3. Machine tool according to claim 1, **characterized in that** the workpiece holder (33) is mobile and/or can rotate at least along/around one axis (10,11).

4. Machine tool according to one of the preceding claims, **characterized in that** the drive (5) acts directly or indirectly, for example via a gearing (54), on the drive shaft (50) and/or the drive (5) is provided as electric motor or a servo motor or hydraulic motor, respectively.

5. Machine tool according to claim 4, **characterized in that** the electric motor (5c) or the servo motor is configured as a synchronous motor, an asynchronous motor or a direct current motor and preferably as a sensorless synchronous or asynchronous motor and/or as a permanent magnet synchronous motor (PMSM) in particular wherein within the synchronous motor exists a sensorless rotor position detection, preferably a sensorless standstill detection and/or the rotor position detection can be done by software or NC-control.

6. Machine tool according to one of the preceding claims, **characterized in that** the adapter connector (51) is located between support points (46) provided at the workpiece holder (33) or in an area (47) limited by the support points (46a).

7. Machine tool according to one of the preceding claims, **characterized in that** the clamping device (4) has a support plate (42) holding the workpiece (2) and that the support plate (42) is connected or supported by several support points (46a) situated on the workpiece holder (33) or on a round table (32) located within the workpiece holder (33).

8. Machine tool according to one of the preceding claims, **characterized in that** the clamping device (4) has at least one clamping element (40, 40') and the clamping element (40, 40') can be activated through the power transmission means (53) provided within the clamping device (4) and/or the clamping elements (40, 40') can be interconnected with a central drive (55) through the power transmission means (53), wherein the central drive (55) is connected with the drive shaft (50).

9. Machine tool according to one of the preceding claims, **characterized in that** the chuck (6) is supported by the workpiece holder (33) or by the round table (32) within the workpiece holder (33), wherein the workpiece holder (33) or the round table (32) can provide a sliding surface (56) for the chuck (6) and/or **in that** the chuck (6) has a rotating spindle (61), held within a chuck housing (60) which is interconnected or supported by the workpiece holder (33) and in particular by several support points (46b), wherein the spindle (61) can be connected with the adapter connector (51) and/or with the drive shaft (50).

10. Machine tool according to one of the preceding claims, **characterized in that** a mechanical, hydraulical, pneumatical, electromechanical and/or electromagnetical clamping or releasing of the workpiece (2) is provided within the chuck (6).

11. Machine tool according to one of the preceding claims, **characterized in that** a common control is provided for the use cases and, in particular wherein the control is provided as separate control or is provided by the control of the machine tool (1).

12. Machine tool according to one of the preceding claims, **characterized in that** clamping of the work piece (2) in the clamping device (4) or in the chuck (6) can be controlled by the control.

13. Machine tool according to one of the preceding claims, **characterized in that** an immobilization or a release of the clamping device (4) or of the chuck (6) can be done automatically, manually, partially automatically or partially manually.

14. Machine tool according to one of the preceding claims, **characterized in that** an automatic or manual engagement of the adapter connector (51) with the clamping device (4) or the chuck (6) is provided and/or the adapter connector (51) has means to immobilize and/or to release the clamping device (4) or the chuck (6).

15. Use of a machine tool according to one of the claims 1 to 14 for the optional processing of a workpiece with rotating machining tools or in a rotational processing.

## Revendications

1. Machine d'usinage (1) destinée à usiner au moins une pièce à usiner (2), comportant un support de pièce à usiner (33) portant la pièce à usiner (2), un moyen de transmission de force (53) permettant à un dispositif de serrage (4) de serrer directement ou indirectement la pièce à usiner (2) et un mandrin rotatif (6) destiné à recevoir directement ou indirectement la pièce à usiner (2) afin de réaliser un usinage abrasif rotationnel ou un usinage rotatif de la pièce à usiner (2), dont le support de pièce à usiner (33) possède un arbre de transmission commandé par un moteur (5) avec un raccord adaptateur (51) sous forme de connecteur rapide, raccord rapide, crabot, connexion à vis ou raccord à baïonnette destiné à le connecter au moyen de transmission de force (53) ou avec le mandrin rotatif (6) et dont la machine d'usinage (1) dispose d'un premier et d'un deuxième cas d'application, dont le premier cas d'application prévoit une connexion entre l'arbre de transmission (50) et le moyen de transmission de force (53) , le moteur (5) servant dans ce cas d'application à commander le dispositif de serrage (4) par rapport au deuxième cas d'application qui prévoit une connexion entre ce même arbre de transmission (5) et le mandrin rotatif (6) destiné à une réception directe ou indirecte de la pièce à usiner (2) pour un usinage abrasif rotationnel ou pour un tournage de la pièce à usiner (2) de façon à ce que la machine d'usinage (1) puisse être utilisée pour un usinage avec un outil d'usinage rotatif et pour un tournage ou l'inverse et ces deux cas d'application peuvent être réalisés sur la même machine d'usinage.

2. Machine d'usinage selon la revendication 1, **caractérisée en ce que** le support de pièce à usiner (33) est immobile.

3. Machine d'usinage selon la revendication 1, **caractérisée en ce que** le support de pièce à usiner (33) est mobile et/ou peut tourner le long ou autour d'au moins un axe (10, 11).

4. Machine d'usinage selon une des revendications précédentes, **caractérisée en ce que** le moteur (5) agit directement ou indirectement, par exemple via un engrenage (54), sur l'arbre de transmission (50) et/ou **en ce que** le moteur (5) est un moteur électrique voire un servomoteur ou un moteur hydraulique.

5. Machine d'usinage selon la revendication 4, **caractérisée en ce que** le moteur électrique (5c) voire le servomoteur est un moteur synchrone, asynchrone ou un moteur à courant continu, de préférence un moteur synchrone ou asynchrone sans codeur et/ou un moteur synchrone à aimant permanent (PMSM), possédant en particulier à l'intérieur un détecteur de la position du rotor sans codeur et de préférence un détecteur d'arrêt du rotor sans codeur et/ou **en ce que** la détermination de la position du rotor est contrôlée par logiciel ou par NC.

6. Machine d'usinage selon une des revendications précédentes, **caractérisée en ce que** le raccord adaptateur (51) est situé entre des points de support (46a) du support de pièce à usiner (33) ou au niveau d'une surface (47) délimitée par ces points de support (46a).

7. Machine d'usinage selon une des revendications précédentes, **caractérisée en ce que** le dispositif de serrage (4) possède une plaque de support (42) maintenant la pièce à usiner (2) et s'appuyant ou étant liée via plusieurs points de support (46a) au support de pièce à usiner (33) ou à une table ronde (32) située au niveau du support de pièce à usiner (33).

8. Machine d'usinage selon une des revendications précédentes, **caractérisée en ce que** le dispositif de serrage (4) comporte au moins un élément de serrage (40, 40') et **en ce que** l'élément de serrage (40, 40') peut être activé à l'aide des moyens de transmission de force (53) situés à l'intérieur du dispositif de serrage (4) et/ou **en ce que** les éléments de serrage (40, 40') peuvent être liés à la commande centrale (55) à l'aide de moyens de transmission de force (3), cette commande centrale (55) étant liée à l'arbre de transmission (50).

9. Machine d'usinage selon une des revendications précédentes, **caractérisée en ce que** le mandrin rotatif (6) s'appuie sur le support de pièce à usiner (33) ou sur la table ronde (32) située à l'intérieur du support de pièce à usiner (33), lequel support de pièce à usiner (33) ou la table ronde (32) peut présenter une surface de coulissement (56) pour le mandrin rotatif (6) et/ou **en ce que** le mandrin rotatif (6) comporte un corps de mandrin (60) lié ou s'appuyant sur le support de pièce à usiner (33), en particulier à l'aide de plusieurs points de support (46b) et, à l'intérieur de ce corps de mandrin (60), une broche rotative (61), pouvant être connectée au raccord adaptateur (51) et/ou à l'arbre de transmission (50).

10. Machine d'usinage selon une des revendications précédentes, **caractérisée en ce qu'**un serrage ou un desserrage mécanique, hydraulique, pneumatique, électromécanique et/ou électromagnétique de la pièce à usiner (2) est prévu à l'intérieur du mandrin rotatif (6).

11. Machine d'usinage selon une des revendications précédentes, **caractérisée en ce qu'**un système de contrôle commun est prévu pour les cas d'application et en particulier **en ce que** la fonction de contrôle est accomplie par un système de contrôle séparé ou par le système de contrôle de la machine d'usinage (1).

12. Machine d'usinage selon une des revendications précédentes, **caractérisée en ce que** le serrage de la pièce à usiner (2) à l'intérieur du dispositif de serrage (4) ou dans le mandrin rotatif (6) peut être contrôlé par le système de contrôle.

13. Machine d'usinage selon une des revendications précédentes, **caractérisée en ce qu'**un serrage ou un desserrage du dispositif de serrage (4) ou du mandrin rotatif (6) peut être réalisé automatiquement, manuellement, partiellement automatiquement ou partiellement manuellement.

14. Machine d'usinage selon une des revendications précédentes, **caractérisée en ce qu'**un engagement automatique ou manuel du raccord adaptateur (51) au niveau du dispositif de serrage (4) ou du mandrin rotatif (6) est prévu et/ou **en ce que** le raccord adaptateur (51) possède des moyens d'immobilisation et/ou de détachement du dispositif de serrage (4) ou du mandrin rotatif (6).

15. Utilisation d'une machine d'usinage selon une des revendications 1 à 14 destinée à l'usinage d'une pièce à usiner au choix par un outil d'usinage rotatif ou par tournage.
